# EUROPEAN PATENT APPLICATION

(11) **EP 4 722 323 A1**
(43) Date of publication of application: **08.04.2026**
(21) Application number: 25206825.9
(22) Date of filing: 06.10.2025
(51) Int. Cl.: C11D 1/72, C11D 1/82, C11D 1/90, C11D 1/94, C11D 3/04

(54) **CLEANING SOLUTION FOR INKJET RECORDING APPARATUS AND INK SET**

(30) Priority: 07.10.2024 JP 2024175976
(71) Applicant: KYOCERA Document Solutions Inc., Osaka-shi, Osaka 540-8585 (JP)
(72) Inventor: KATAYAMA, Yosuke, Osaka-shi, Osaka 540-8585 (JP)
(74) Representative: Viering, Jentschura & Partner mbB Patent- und Rechtsanwälte

(57) **Abstract**

A cleaning solution is a cleaning solution for cleaning an ink ejection surface (F) of a recording head (2) of an inkjet recording apparatus, including: water; a water-soluble organic solvent; an amphoteric surfactant having a betaine structure; a silicone surfactant; a nonionic surfactant other than the silicone surfactant; and an inorganic salt having a pH buffering effect. The cleaning solution has viscosity at 25°C of 2.5 mPa·s or less. The cleaning solution has a static surface tension of 25 mN/m or less. The cleaning solution has a pH of 8.0 or more and 9.5 or less after being sealed and allowed to stand at room temperature for one year.

## Description

### Incorporation by Reference

This application claims the benefit of Japanese Priority Patent Application JP 2024-175976 filed October 7, 2024, the entire contents of which are incorporated herein by reference.

### Field

The present disclosure relates to a cleaning solution for an inkjet recording apparatus and an ink set.

### Background

An inkjet recording apparatus forms an image on a recording medium by ejecting an ink for inkjet recording from an ejection surface of a recording head. A cleaning method is known in which a cleaning solution is supplied to the ejection surface and the ejection surface is wiped with a wiping blade to remove the stains caused by the ink remaining on the ejection surface (e.g., Japanese Patent Application Laid-open No. 2018-202746) .

Meanwhile, the ink used in the inkjet recording apparatus includes a resin component (a dispersed resin and a binder resin) in some cases from the viewpoints of ensuring dispersion stability of the pigment and reliably fixing the pigment on the recording medium. When an image is formed using an ink including the resin component, a dried ink including the resin component is fixed to the ink ejection surface of a recording head in some cases. Such a dried ink is strongly fixed to the ink ejection surface of the recording head, making it difficult to remove. In this regard, a cleaning method having excellent cleaning performance capable of effectively removing the above-mentioned resin component is being investigated (e.g., Japanese Patent Application Laid-open No. 2020-131625).

### Summary

A cleaning solution according to an embodiment of the present disclosure is a cleaning solution for cleaning an ink ejection surface of a recording head of an inkjet recording apparatus, including:
water;
a water-soluble organic solvent;
an amphoteric surfactant having a betaine structure;
a silicone surfactant;
a nonionic surfactant other than the silicone surfactant; and
an inorganic salt having a pH buffering effect.

The cleaning solution has viscosity at 25°C of 2.5 mPa·s or less.

The cleaning solution has a static surface tension of 25 mN/m or less.

The cleaning solution has a pH of 8.0 or more and 9.5 or less after being sealed and allowed to stand at room temperature for one year.

An ink set according to another embodiment of the present disclosure is an ink set for an inkjet recording apparatus, including:
the cleaning solution; and
an ink that includes a resin component.
Dry viscosity at 25°C of the ink dried by 50 mass% is 500 mPa·s or more.

### Brief Description of Figures

Fig. 1 is a diagram showing a cleaning solution supplying step in a cleaning method according to an embodiment of the present disclosure;
Fig. 2 is a diagram showing a wiping step in the cleaning method;
Fig. 3 is a diagram showing a wiping step in the cleaning method;
Fig. 4 is a diagram showing a wiping step in the cleaning method; and
Fig. 5 is a diagram showing a wiping step in the cleaning method.

### Detailed Description

Examples of a cleaning method having excellent cleaning performance include a method of using a cleaning solution that includes an organic solvent having high hydrophobicity. However, this method causes the resin member forming a recording head to gradually degrade due to an organic solvent, leading to a decrease in the ejection property of the recording head over the long term in some cases. Further, in the case where an aqueous cleaning solution is used to prevent adverse effects on the resin member forming the recording head, the cleaning performance deteriorates in some cases over time.

In view of the circumstances as described above, it is an object of the present disclosure to provide a cleaning solution for cleaning an ink ejection surface of a recording head of an inkjet recording apparatus, which is capable of maintaining high cleaning performance for a long period of time while suppressing adverse effects on the ink ejection surface of the recording head, and an ink set including the same.

An embodiment of the present disclosure will be described. Note that in the following description, the expression "content of B in A" refers to the mass ratio of B when the mass of A is 100 mass%. Further, the components described in the present specification may each be used alone, or two or more of them may be used in combination.

### [Cleaning solution]

The cleaning solution according to an embodiment of the present disclosure is a cleaning solution for cleaning an ink ejection surface of a recording head of an inkjet recording apparatus. More specifically, the cleaning solution is supplied to the ink ejection surface and is used in, for example, a cleaning step of wiping the ink ejection surface with a wiping blade. Further, the cleaning solution is more favorably used in a step of wiping with a wiping blade a plurality of times (favorably two times).

The cleaning solution according to this embodiment includes water, a water-soluble organic solvent, an amphoteric surfactant having a betaine structure, a silicone surfactant, a nonionic surfactant other than the silicone surfactant, and an inorganic salt having a pH buffering effect, the cleaning solution having viscosity at 25°C of 2.0 mPa·s or less, a static surface tension of 25 mN/m or less, and a pH of 8.0 or more and 9.5 or less after being sealed and allowed to stand at room temperature for one year.

When a cleaning solution includes water and a water-soluble organic solvent, the cleaning solution can be used as an aqueous cleaning solution with a low content of a hydrophobic organic solvent or no hydrophobic organic solvent. For this reason, adverse effects such as deformation on the resin member of the ink ejection surface of the inkjet recording apparatus can be suppressed.

Further, the cleaning solution according to this embodiment is capable of reducing viscosity and surface tension by including at least three types of surfactant, i.e., an amphoteric surfactant having a betaine structure, a silicone surfactant, and a nonionic surfactant other than the silicone surfactant. This makes it easier for the cleaning solution to penetrate into the dried ink formed by the ink ejected and fixed on the ink ejection surface, and makes the dried ink likely to disperse in the cleaning solution, promoting the removal of the dried ink.

Meanwhile, the cleaning solution for an inkjet recording apparatus is deposited into a tank or the like, supplied in small amounts each time the ink ejection surface is cleaned, and used for a long period of time of one year or more in some cases. In the past, when such a cleaning solution is used for a long period of time, the cleaning performance had gradually decreased. Further, in the case where the number of times of wiping has been increased as the cleaning performance decreases, repeated wiping has worn out water-repellent coating of the ink ejection surface of the recording head over a long period, causing adverse effects on the ink ejection surface in some cases.

In this regard, the cleaning solution according to this embodiment includes an inorganic salt having a pH buffering effect in addition to water, a water-soluble organic solvent, and a surfactant, and is prepared such that it has a pH of 8.0 or more and 9.5 or less after being sealed and allowed to stand at room temperature for one year. This allows a decrease in pH due to the dissolution of carbon dioxide or the like from the air into water to be suppressed, and thus deterioration of the cleaning performance to be suppressed. Therefore, the cleaning solution according to this embodiment has high cleaning performance and is capable of maintaining the high cleaning performance for a long period of time. Details of the cleaning solution will be described below.

### (Water)

The content of water in the cleaning solution according to this embodiment is appropriately set in accordance with the contents of other components, and is favorably 40.0 mass% or more and 90.0 mass% or less, more favorably 60.0 mass% or more and 80.0 mass% or less.

### (Water-soluble organic solvent)

The cleaning solution according to this embodiment includes one or two or more types of water-soluble organic solvents from the viewpoint of imparting viscosity and surface tension described below. Examples of the water-soluble organic solvent include a polyhydric alcohol, glycol ether, a lactam compound, a nitrogen-containing compound, an acetate compound, thiodiglycol, and dimethylsulfoxide. Note that the water-soluble organic solvent in the present specification refers to an organic solvent having solubility in water of 1.0 mass% or more at 25°C.

Examples of the polyhydric alcohol include a glycol compound and glycerin. Examples of the glycol compound include ethylene glycol, 1,3-propanediol, propylene glycol, 1,2-pentanediol, 1,5-pentanediol, 1,2-octanediol, 1,8-octanediol, 3-methyl-1,3-butanediol, 3-methyl-1,5-pentanediol, diethylene glycol, triethylene glycol, and tetraethylene glycol, polyethylene glycol.

Examples of the glycol ether include diethylene glycol diethyl ether, diethylene glycol monobutyl ether, ethylene glycol monomethyl ether, ethylene glycol monobutyl ether, diethylene glycol monomethyl ether, diethylene glycol monoethyl ether, diethylene glycol diethyl ether, triethylene glycol monomethyl ether, triethylene glycol monoethyl ether, triethylene glycol monobutyl ether, and propylene glycol monomethyl ether.

Examples of the lactam compound include 2-pyrrolidone and N-methyl-2-pyrrolidone.

Examples of the nitrogen-containing compound include 1,3-dimethylimidazolidinone, formamide, and dimethylformamide.

Examples of the acetate compound include diethylene glycol monoethyl ether acetate.

The lower limit of the content of the water-soluble organic solvent in the cleaning solution is favorably 5.0 mass% or more, more favorably 10.0 mass% or more, from the viewpoint of imparting viscosity and surface tension described below. Further, the upper limit of the content of the water-soluble organic solvent is favorably 40.0 mass% or less, more favorably 35.0 mass% or less, considering the balance with other raw materials. Note that in the case where the cleaning solution includes a plurality of types of water-soluble organic solvents, the content of the above water-soluble organic solvent is the total content of the plurality of water-soluble organic solvents.

Meanwhile, from the viewpoint of suppressing adverse effects on the members of the inkjet recording apparatus, the content of the hydrophobic organic solvent in the cleaning solution is favorably 1.0 mass% or less, more favorably 0.0 mass%. It is favorable that the cleaning solution does not include the hydrophobic organic solvent. Note that the hydrophobic organic solvent in the present specification refers to an organic solvent having solubility in water of less than 1.0 mass% at 25°C.

### (Amphoteric surfactant having betaine structure)

The amphoteric surfactant having a betaine structure has excellent performance in adhering to the surroundings of the dried ink fixed to the ink ejection surface to release the stains from the cleaning target and excellent performance in dispersing the released stains in the cleaning solution. Note that the betaine refers to an intramolecular salt having a cationic structure (e.g., a quaternary ammonium ion structure) and an anionic structure (e.g., an anionic structure of an acid such as carboxylic acid) in one molecule. As the amphoteric surfactant having a betaine structure, an amphoteric surfactant having an amidoalkyl betaine structure is favorable. As the amphoteric surfactant having an amidoalkyl betaine structure, a compound represented by the following general formula (1) is favorable. The amphoteric surfactant having an amidoalkyl betaine structure tends to ionize easily in alkaline environments and exert a more excellent lubricating effect. For this reason, by setting the pH of the cleaning solution to 8.0 or more and 10.0 or less, it is possible to more effectively suppress the wearing of the water-repellent film of the recording unit of the inkjet recording apparatus.

### (Chem. 1)

In the general formula (1), R represents a 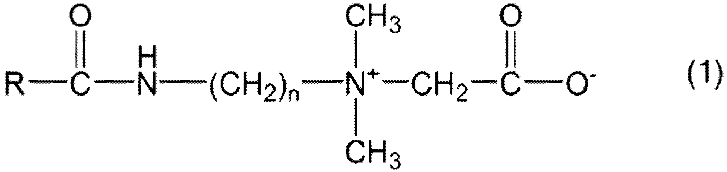 monovalent chain hydrocarbon group having 6 or more and 20 or less carbon atoms. n represents an integer of 1 or more and 5 or less.

R favorably represents a monovalent chain hydrocarbon group having 10 or more and 18 or less carbon atoms. Examples of the monovalent chain hydrocarbon group represented by R include a chain alkyl group and a chain alkenyl group. n favorably represents 3.

Examples of the amphoteric surfactant having an amidoalkyl betaine structure include a fatty acid amidopropyl betaine surfactant. Examples of the fatty acid amidopropyl betaine surfactant include coconut oil fatty acid amidopropyl betaine, lauramidopropyl betaine, palm kernel fatty acid amidopropyl betaine, isostearic acid amidopropyl betaine, and linoleic acid amidopropyl betaine. As the amphoteric surfactant having an amidoalkyl betaine structure, coconut oil fatty acid amidopropyl betaine, lauramidopropyl betaine, or palm kernel fatty acid amidopropyl betaine is favorable.

The content of the amphoteric surfactant having a betaine structure in the cleaning solution is favorably 0.01 mass% or more and 2.0 mass% or less, more favorably 0.05 mass% or more and 1.0 mass% or less, from the viewpoint of imparting excellent cleaning performance to the cleaning solution.

### (Silicone surfactant)

The silicone surfactant reduces the surface tension of the cleaning solution, making the cleaning solution easier to penetrate into stains. The silicone surfactant means a surfactant having a siloxane bond. As the silicone surfactant, a polyether-modified silicone surfactant is favorable and a polyether-modified polydimethylsiloxane is more favorable.

In the cleaning solution, the content of the silicone surfactant is favorably 0.01 mass% or more and 2.0 mass% or less, more favorably 0.05 mass% or more and 1.0 mass% or less, from the viewpoint of imparting appropriate surface tension to the cleaning solution.

### (Nonionic surfactant)

The nonionic surfactant according to this embodiment is one or two or more types of nonionic surfactants other than the above-mentioned silicone surfactant. As the nonionic surfactant, those that can be used in the present technical field can be used. Examples thereof include polyoxyethylene dodecylether, polyoxyethylene hexadecylether, polyoxyethylene nonylphenylether, polyoxyethylene sorbitan monooleate ether, monodecanoyl sucrose, and an ethylene oxide adduct of acetylene glycol. As the nonionic surfactant according to this embodiment, an acetylene surfactant such as an ethylene oxide adduct of acetylene glycol is favorable from the viewpoints of reducing the static surface tension effectively and enhancing permeability into the dried ink.

### (Acetylene surfactant)

In the present specification, the acetylene surfactant refers to a surfactant having an acetylene bond (triple bond between carbon atoms). The acetylene surfactant is favorably a surfactant having a portion represented by the following formula (2). In the formula (2), R1 represents a group having a hydroxy group and * represents atomic bonding.

### (Chem. 2)

The atomic bonding represented by * in the 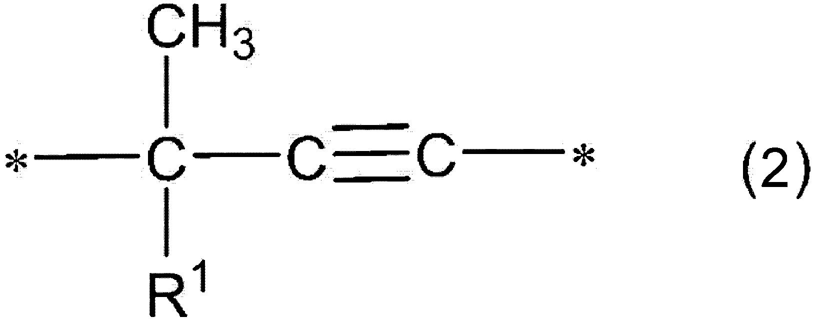 formula (2) is bonded to an atom (e.g., a hydrogen atom or a carbon atom) forming the acetylene surfactant.

Examples of the group having a hydroxy group represented by R1 in the formula (2) include a hydroxy group and a group to which ethyleneoxide is added. As the group to which ethyleneoxide is added, a group represented by the following formula (3) is favorable. In the formula (3), m represents the number of moles added of ethyleneoxide. m represents for example, an integer of 1 or more. * in the formula (3) represents atomic bonding, and this atomic bonding is bonded to the carbon atom to which R1 in the formula (2) is bonded.

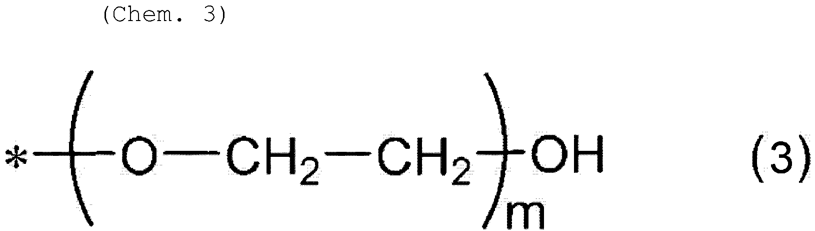

Examples of the acetylene surfactant include acetylene alcohol, acetylene glycol, and an ethylene oxide adduct of acetylene glycol. The acetylene alcohol favorably includes a portion represented by the following formula (2A). The acetylene glycol favorably includes a portion represented by the following formula (2B). The ethylene oxide adduct of acetylene glycol is favorably a compound represented by the following formula (2C).

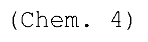

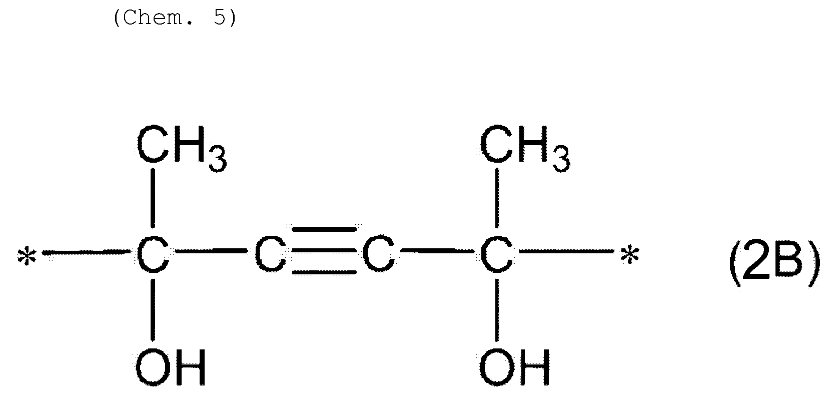

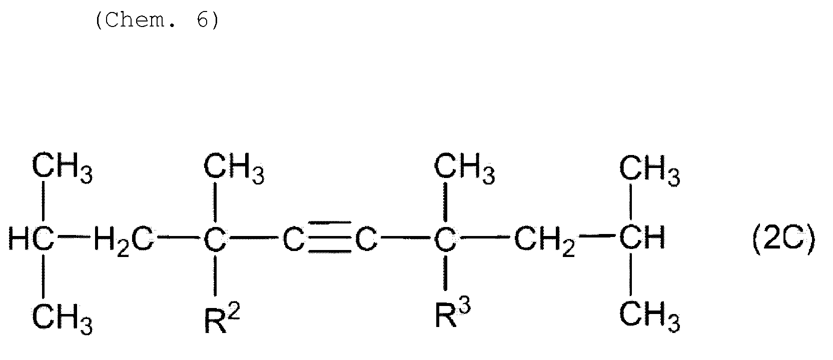

* in the formulae (2A) and (2B) represents atomic bonding, and this atomic bonding is bonded to the carbon atom forming the acetylene surfactant. R2 and R3 in the formula (2C) each represent the group to which ethyleneoxide is added described above.

The acetylene surfactant favorably has an HLB value of 3 or more and 20 or less, more favorably 8 or more and 18 or less. Further, the acetylene surfactant may have an HLB value of 8 or more and 10 or less, 12 or more and 14 or less, or 16 or more and 18 or less. Note that the HLB value in the present specification is a value calculated using the Griffin method by the formula "HLB value = 20 x (sum of formula weights of hydrophilic parts) / molecular weight".

The content of the acetylene surfactant in the cleaning solution is favorably 0.3 mass% or more and 1.5 mass% or less, more favorably 0.5 mass% or more and 1.0 mass% or less. When the content ratio of the acetylene surfactant to the mass of the cleaning solution is 0.3 mass% or more, it is possible to sufficiently achieve the effect of reducing the static surface tension. Meanwhile, when the content ratio of the acetylene surfactant to the mass of the cleaning solution is 1.5 mass% or less, the acetylene surfactant, water, and the water-soluble organic solvent are sufficiently mixed without phase separation.

In the cleaning solution, the total content of the amphoteric surfactant having a betaine structure, the silicone surfactant, and the nonionic surfactant is favorably 0.1 mass% or more and 5.0 mass% or less, more favorably 0.5 mass% or more and 3.0 mass% or less.

Further, in the cleaning solution, the ratio of the total amount of the content of the nonionic surfactant and the content of the silicone surfactant to the content of the amphoteric surfactant having a betaine structure is favorably 10 or less. This allows a cleaning solution having sufficiently low viscosity and surface tension and high permeability into the dried ink to be prepared. Further, the above ratio is more favorably 5 or more and 10 or less from the viewpoint of more stably exerting the above operation and effect. Note that the above ratio is represented by the formula {(the content of the nonionic surfactant) + (the content of the silicone surfactant)} / (the content of the amphoteric surfactant having a betaine structure).

### (Inorganic salt)

The inorganic salt according to this embodiment has a pH buffering effect. In the present specification, the inorganic salt having a pH buffering effect refers to a salt formed of either a weak acid and its salt or a weak base and its salt. The inorganic salt according to this embodiment is favorably an inorganic salt having a pH buffer range of 8.0 or more and 10.0 or less from the viewpoint of enhancing the cleaning performance. Specific examples thereof include sodium borate, sodium hydrogen carbonate, sodium carbonate, sodium dihydrogen phosphate, disodium hydrogen phosphate, and an ammonium salt.

The lower limit of the content of the inorganic salt in the cleaning solution is favorably 0.01 mass% or more, more favorably 0.05 mass% or more, from the viewpoint of effectively achieving the pH buffering effect. The upper limit of the content of the inorganic salt in the cleaning solution is favorably 1.0 mass% or less, more favorably 0.5 mass% or less, considering the balance with other components from the viewpoint of ensuring cleaning performance.

### (Viscosity)

In this embodiment, the cleaning solution has viscosity at 25°C of 2.5 mPa·s or less. A cleaning solution having such viscosity allows it to easily remain on a wide region of the ink ejection surface when wiped with a wiping blade or the like, thereby increasing the contact time between the dried ink fixed to the ink ejection surface and the cleaning solution. This promotes the penetration of the cleaning solution into the dried ink and allows the cleaning performance of the cleaning solution to be enhanced. Further, the upper limit of the viscosity at 25°C of the cleaning solution is favorably 2.0 mPa·s or less from the viewpoint of stably achieving the above operation and effect. The lower limit of the viscosity at 25°C of the cleaning solution is not particularly limited, but is favorably 1.0 mPa·s or more, more favorably 1.5 mPa·s or more, considering the remaining of the cleaning solution on the ink ejection surface. Note that the viscosity in the present specification is a value measured at 25°C using a falling-ball automatic microviscometer (e.g., "AMVn" manufactured by Anton Paar GmbH) in accordance with the method described in Japanese Industrial Standard (JIS) Z8803: 2011 "Methods for viscosity measurement of liquid".

### (Static surface tension)

In this embodiment, the cleaning solution has a static surface tension of 25 mN/m or less. This allows the cleaning solution to penetrate into the fixed dried ink and the dried ink to be peeled off and removed from the ink ejection surface, thereby enhancing the cleaning performance of the cleaning solution. Further, the upper limit of the static surface tension of the cleaning solution is favorably 23 mN/m or less from the viewpoint of stably achieving the above the operation and effect. The lower limit of the static surface tension of the cleaning solution is not particularly limited, but is favorably 15 mN/m or more, more favorably 20 mN/m or more, considering the remaining of the cleaning solution on the ink ejection surface. Note that in the present specification, the static surface tension is a value measured at 25°C using a surface tensiometer (e.g., the "automatic surface tensiometer DY-300" manufactured by Kyowa Interface Science Co., Ltd.) in accordance with the Wilhelmy method (plate method).

### (pH)

In this embodiment, the cleaning solution has a pH of 8.0 or more and 9.5 or less after being sealed and allowed to stand at room temperature for one year. The cleaning solution according to this embodiment exerts the buffering effect by the inorganic salt having a pH buffering effect, and a decrease in the pH is suppressed for a long period of time. This allows the high cleaning performance to be maintained for a long period of time. In the present specification, the "pH" refers to a hydrogen ion exponent measured at 25°C, unless otherwise specified.

Further, in this embodiment, the difference between the pH before the cleaning solution is sealed and allowed to stand and the pH after the cleaning solution is sealed and allowed to stand for one year is favorably 1.0 or less, more favorably 0.5 or less, still more favorably 0.2 or less.

### (Other components)

The cleaning solution may further include known additives (e.g., a dissolution stabilizer, an anti-drying agent, an antioxidant, a viscosity adjustor, a pH adjuster, and an antifungal agent) as necessary.

### [Ink and ink set]

The cleaning solution according to this embodiment is favorably used to clean the ink ejection surface of the recording head that ejects an ink including a resin component (e.g., a dispersed resin or a binder resin). The ink that includes a resin component has excellent adhesion to, for example, a non-absorbent recording medium and a low absorption recording medium, and can be an ink for a non-absorbent recording medium and/or a low absorption recording medium. Examples of the resin component include a (meth)acrylic resin, a styrene-(meth)acrylic resin, a urethane resin, a polyester resin, and an olefin resin. The content ratio of the resin component in the aqueous ink is, for example, 0.1 mass% or more and 5.0 mass% or less. Note that in the present specification, acrylic and methacrylic are collectively referred to as "(meth)acrylic".

Further, the viscosity of the ink that includes the above resin component tends to increase due to drying. Specifically, the dry viscosity at 25°C when the ink is dried by 50 mass% of that before drying can be 500 mPa·s or more. The phrase "ink dried by 50 mass%" refers to when the ink is placed in a container such as a petri dish, dried in a constant temperature bath at, for example, 60°C, and the mass of the ink reaches 50 mass% with respect to the mass of the ink before drying being 100 mass%. The dry viscosity refers to a value measured at 25°C using a dried ink and a falling-ball automatic microviscometer (e.g., "AMVn" manufactured by Anton Paar GmbH) in accordance with the method described in Japanese Industrial Standard (JIS) Z8803: 2011 "Methods for viscosity measurement of liquid".

In the case where the ink that includes a resin component remains on the ink ejection surface and is dried, the resin component is fixed to the ink ejection surface, making it difficult to remove in some cases. Therefore, a cleaning solution having high cleaning performance is desired. Further, the cleaning solution is used for a long period of time of one year or more in some cases, and is desired to be capable of maintaining the high cleaning performance for a long period of time.

In this regard, by including an amphoteric surfactant having a betaine structure, a silicone surfactant, and a nonionic surfactant other than the silicone surfactant, the cleaning solution according to this embodiment has low viscosity and low surface tension, easily remains on the ink ejection surface by wiping or the like, and easily penetrates into the fixed dried ink. This promotes the dispersion of the dried ink into the cleaning solution and allows the cleaning performance for the dried ink to be enhanced. Further, the cleaning solution according to this embodiment includes an inorganic salt having a pH buffering effect, thereby suppressing a decrease in the pH for a long period of time. For this reason, the high cleaning performance of the cleaning solution can be maintained for a long period of time. Further, by including water and a water-soluble organic solvent, the cleaning solution can be configured to include a reduced amount of the hydrophobic organic solvent or no hydrophobic organic solvent. For this reason, adverse effects on the ink ejection surface such as deformation of the resin member forming the ink ejection surface can be suppressed.

Note that the ink and cleaning solution according to this embodiment may constitute an ink set for an inkjet recording apparatus. The ink set may include one type of ink and the cleaning solution, or a plurality of types of inks and the cleaning solution.

Further, the cleaning solution according to this embodiment is capable of removing the dried ink more effectively by being used in the following cleaning method.

### [Cleaning method]

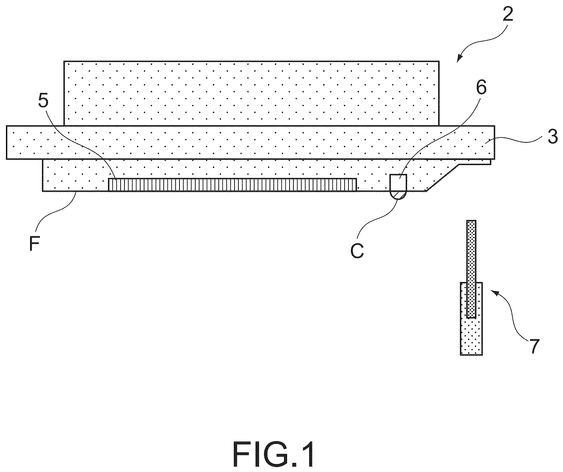

An example of a cleaning method in which the cleaning solution according to this embodiment is used will be described. The cleaning method according to this embodiment includes, for example, a cleaning solution supplying step and a wiping step. In the example shown in Fig. 1 to Fig. 5, a schematic side view of a recording head that ejects an ink to form an image, which is included in an inkjet recording apparatus, is shown. In these figures, a reference symbol 2, a reference symbol 3, a reference symbol 5, a reference symbol 6, a reference symbol 7, and a reference symbol F respectively indicate a recording head, a head housing that holds the recording head 2, a recording unit that ejects an ink, a cleaning solution supplying unit, a wiping blade, and an ink ejection surface. Note that the inkjet recording apparatus may include a plurality of recording heads 2, but one recording head 2 is described as an example in these figures.

### (Cleaning solution supplying step)

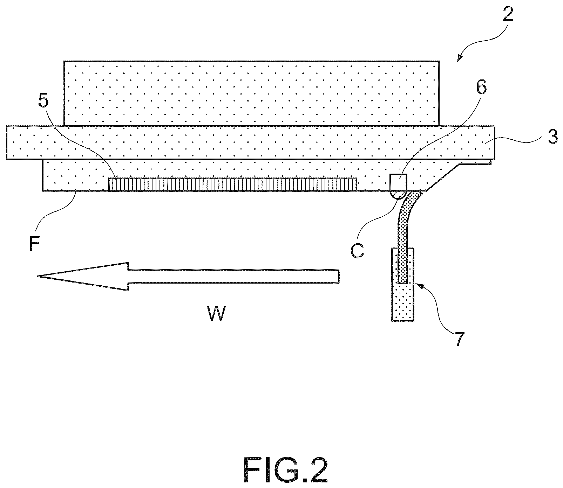

Fig. 1 shows a cleaning solution supplying step. In the cleaning solution supplying step, a cleaning solution C is supplied to the ink ejection surface F of the recording head 2. The supply of the cleaning solution C is performed by, for example, the cleaning solution supplying unit 6 disposed on the side of the recording unit 5. The cleaning solution supplying unit 6 favorably supplies the cleaning solution C to a portion of the ink ejection surface F upstream of the recording unit 5 with reference to a wiping direction W (see Fig. 2), for example. The supplied cleaning solution C adheres to the lower part of the cleaning solution supplying unit 6 to form a meniscus.

In this step, the supply amount of the cleaning solution is favorably 0.5 µL/cm² or more and 10.0 µL/cm² or less, more favorably 1.5 µL/cm² or more and 4.0 µL/cm² or less. By setting the supply amount of the cleaning solution to 0.5 µL/cm² or more, the cleaning method according to this embodiment is capable of exhibiting more excellent cleaning performance. By setting the supply amount of the cleaning solution to 10.0 µL/cm² or less, the cleaning method according to the present disclosure is capable of more reliably suppressing adverse effects on the recording head.

### (Wiping step)

Fig. 2 to Fig. 5 show the wiping step. In the wiping step, the ink ejection surface F of the recording head 2 is wiped with the wiping blade 7. In this embodiment, the number of times of wiping is favorably two. Further, the wiping blade 7 is, for example, a rubber wiper. The line pressure of the wiping blade 7 is, for example, 5 N/m or more and 20 N/m or less. Note that the wiping direction W is the direction in which the wiping blade 7 wipes the ink ejection surface F and is the direction from right to left relative to the paper surface in the illustrated example.

### (First wiping)

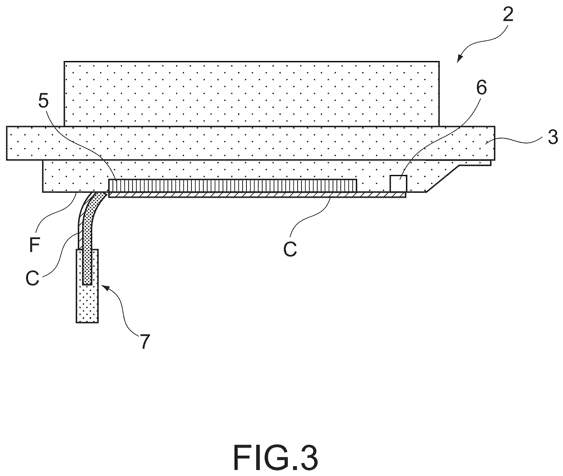

As shown in Fig. 2 and Fig. 3, in the first wiping, the wiping blade 7 wipes the ink ejection surface F of the recording head 2 in the wiping direction W. When the wiping blade 7 passes through the lower part of the cleaning solution supplying unit 6, the cleaning solution C adheres to the wiping blade 7. The cleaning solution C adhered to the wiping blade 7 then moves on the ink ejection surface F along with the wipe operation of the wiping blade 7. Here, the cleaning solution C has low surface tension and low viscosity and the wiping speed of the wiping blade 7 in the first wiping is relatively low. For this reason, part of the cleaning solution C moving on the ink ejection surface F together with the wiping blade 7 remains on the ink ejection surface F. That is, in the first wiping, the cleaning solution C is partially left unwiped intentionally. As a result, as shown in Fig. 3, a liquid film is formed by the cleaning solution C on the ink ejection surface F of the recording head 2 after the first wiping. The liquid film of the cleaning solution C continues to exhibit the function of releasing the resin component adhered to the recording unit 5 from the ink ejection surface F and dispersing the resin component in the cleaning solution C until the second wiping is performed.

The wiping speed of the first wiping is favorably 5 mm/sec or more and 25 mm/sec or less, more favorably 15 mm/sec or more and 22 mm/sec or less. By setting the wiping speed of the first wiping to 5 mm/sec or more, the cleaning method according to this embodiment is capable of performing cleaning at a practical speed. By setting the wiping speed of the first wiping to 25 mm/sec or less, the cleaning method according to this embodiment is capable of intentionally causing the cleaning solution C to be partially unwiped on the ink ejection surface F. As a result, the cleaning method according to this embodiment is capable of exhibiting excellent cleaning performance.

### (Second wiping)

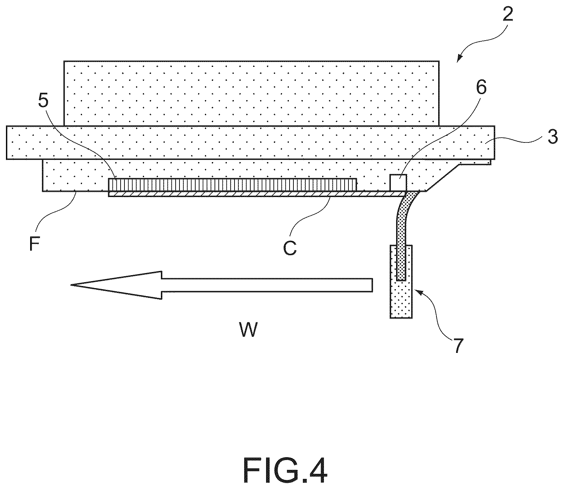

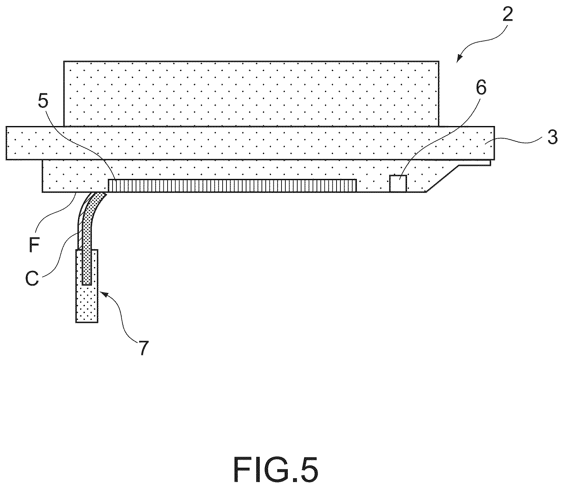

As shown in Fig. 4 and Fig. 5, in the second wiping, the wiping blade 7 wipes the ink ejection surface F of the recording head 2 in the wiping direction W. The wiping blade 7 removes the cleaning solution C remaining on the ink ejection surface F together with the above-mentioned resin component. Since the wiping speed of the second wiping is relatively high, the wiping blade 7 reliably removes the cleaning solution C without leaving the unwiped cleaning solution C. As a result, as shown in Fig. 5, the ink ejection surface F of the recording head 2 after the second wiping is in a state where both the ink and the cleaning solution C have been removed (cleaning has been completed).

The wiping speed of the second wiping is favorably 45 mm/sec or more and 100 mm/sec or less, more favorably 45 mm/sec or more and 70 mm/sec or less, still more favorably 47 mm/sec or more and 55 mm/sec or less. By setting the wiping speed of the second wiping to 45 mm/sec or more, the cleaning method according to this embodiment is capable of preventing the cleaning solution C from being left unwiped on the ink ejection surface F after the second wiping. As a result, the cleaning method according to this embodiment is capable of suppressing the influence of the cleaning solution C left unwiped on the ejection property of the recording head 2. By setting the wiping speed of the second wiping to 100 mm/sec or less, the cleaning method according to this embodiment is capable of suppressing the wearing of the ink ejection surface F even if the ink ejection surface F of the recording head 2 has been subjected to water-repellent coating or the like.

Note that the cleaning method according to this embodiment may include a step other than the above steps. For example, the cleaning method may include a preliminary wiping step of wiping the ink ejection surface F with the wiping blade 7 without supplying the cleaning solution before the cleaning solution supplying step. Further, the cleaning method according to this embodiment may further include another step other than the preliminary wiping step, the cleaning solution supplying step, and the wiping step. Further, in the cleaning solution supplying step shown in Fig. 1, the cleaning solution C has been supplied to a portion of the ink ejection surface F of the recording head 2 upstream of the recording unit 5. However, in the cleaning method according to this embodiment, the cleaning solution supplying step may supply the cleaning solution C to another portion of the ink ejection surface F or the entire ink ejection surface F. Further, in the cleaning method according to this embodiment, the cleaning solution supplying step may supply the cleaning solution C to the ink ejection surface F by a method such as spray application.

### [Additional remarks]

Although an embodiment of the present disclosure has been described above, the present disclosure is not limited to only the above-mentioned embodiment, and various modifications can be made without departing from the essence of the present disclosure.

### (Examples)

Although Examples of the present disclosure will be described below, the present disclosure is not limited to the following Examples.

### [Preparation of cleaning solution]

Raw materials shown in Table 1 were added to a container and stirred to prepare cleaning solutions 1 to 7. Note that the cleaning solutions 1 to 4 were used as Examples of the present disclosure, and the cleaning solutions 5 to 7 were used as Comparative Examples.

**(Table 1)**

| | Raw material | Example | | | | Comparative Example | | |
|---|---|---|---|---|---|---|---|---|
| | | Cleaning solution 1 | Cleaning solution 2 | Cleaning solution 3 | Cleaning solution 4 | Cleaning solution 5 | Cleaning solution 6 | Cleaning solution 7 |
| Water-soluble organic solvent [parts by mass] | Glycerin | 15 | 20 | - | 20 | 30 | 20 | 20 |
| | 1,3-propanediol | - | - | 20 | - | - | - | - |
| Surfactant [parts by mass] | Betaine | 0.1 | 0.1 | 0.1 | 0.1 | 0.1 | 0.1 | 0.1 |
| | Silicone | 0.1 | 0.1 | 0.1 | 0.1 | 0.1 | - | 0.1 |
| | Nonionic | 0.7 | 0.7 | 0.7 | 0.7 | 0.7 | 0.8 | 0.7 |
| Inorganic salt [parts by mass] | Sodium borate | 0.1 | 0.1 | 0.1 | - | 0.1 | 0.1 | - |
| | Sodium hydrogen carbonate | - | - | - | 0.1 | - | - | - |
| | Sodium hydroxide | - | - | - | - | - | - | 0.1 |
| Water [parts by mass] | Ion exchanged water | Remainder | | | | | | |
| Total [parts by mass] | | 100 | | | | | | |
| Physical properties | Viscosity [mPa·s] | 1.6 | 1.9 | 1.8 | 1.9 | 3.1 | 1.9 | 1.9 |
| | Surface tension [mN/m] | 22 | 23 | 23 | 23 | 23 | 29 | 23 |
| | pH (immediately after preparation) | 9.4 | 9.0 | 9.4 | 8.1 | 8.5 | 9.0 | 9.0 |

Note that of the raw materials shown in Table 1, AMOGEN (registered trademark) CB-H (manufactured by DKS Co. Ltd.), which included an amphoteric surfactant having an amidoalkyl betaine structure, was used as the betaine surfactant. SAG002 (manufactured by Nissin Chemical Co., Ltd.) was used as the silicone surfactant. OLFINE (registered trademark) E1010 (ethylene oxide adduct of acetylenediol) (manufactured by Nissin Chemical Co., Ltd.) was used as the nonionic surfactant.

### [Measurement of viscosity]

The viscosity was measured at 25°C using a falling-ball automatic microviscometer ("AMVn" manufactured by Anton Paar GmbH) in accordance with the method described in Japanese Industrial Standard (JIS) Z8803: 2011 "Methods for viscosity measurement of liquid".

### [Measurement of surface tension]

The static surface tension was measured at 25°C using a surface tensiometer ("automatic surface tensiometer DY-300" manufactured by Kyowa Interface Science Co., Ltd.) in accordance with the Wilhelmy method (plate method).

### [Measurement of pH (immediately after preparation)]

The pH was measured at a temperature of 25°C using a pH meter ("D-51" manufactured by HORIBA Group Social Media).

### [Evaluation of cleaning performance stability]

### (Preparation of dried ink sample)

The plate including the ink ejection surface was removed from a recording head ("KJ4B-1200" manufactured by KYOCERA Corporation). This plate was used as an evaluation plate. The above-mentioned ink was ejected onto the ink ejection surface of the evaluation plate using another recording head ("KJ4B-1200" manufactured by KYOCERA Corporation) to form a grid-like dot pattern (1000 dots). In the formation of the dot pattern, the volume of ink per drop was set to 15 pL (one dot was formed with 15 pL of ink). Next, the evaluation plate was dried at 40°C for 72 hours. The evaluation plate is a sample that simulates the condition in which the dried ink has adhered to the ink ejection surface of the recording head as stains.

### [Ink]

25.0 parts by mass of a pigment dispersion liquid, 12.5 parts by mass of a binder particle dispersion liquid, 10.0 parts by mass of propylene glycol, 15.0 parts by mass of diethylene glycol monoethyl ether, 3.0 parts by mass of 2-pyrrolidone, 2.0 parts by mass of an acetylene surfactant ("SURFYNOL (registered trademark) 440" manufactured by Nissin Chemical Co., Ltd.), and 32.5 parts by mass of water were sufficiently mixed using a stirrer ("Three-One Motor BL-600" manufactured by Shinto Scientific Co., Ltd.). In this way, an ink to be used for evaluation was prepared. Note that as the pigment dispersion liquid, "EMACOL SF BLACK AH2186F" manufactured by Sanyo Color Works, LTD. (pigment: C.I. Pigment Black 7, dispersion medium: water, pigment concentration: 20 mass%) was used. As the binder particle dispersion liquid, "Mowinyl 6763" manufactured by Japan Coating Resin Co., Ltd. (binder particle dispersion liquid including a urethane-acrylic resin, solid content concentration: 40 mass%) was used.

### (First evaluation)

As first evaluation, the evaluation plate was cleaned using the cleaning solution immediately after preparation, and the cleaning performance of ink stains (removal ratio) was evaluated. First, as the first wiping, 0.1 mL of each cleaning solution was supplied to the above-mentioned evaluation plate (supply amount per unit area: 2.5 µL/cm²). Next, a rubber wiping blade was used to wipe the evaluation plate at a constant line pressure and a speed of 20 mm/sec. Next, as the second wiping, the same amount of each cleaning solution prepared as that in the first wiping was supplied to the above-mentioned evaluation plate, and the evaluation plate was wiped using the above wiping blade at a constant line pressure and a speed of 50 mm/sec.

After the two times of wiping, the ink ejection surface of the evaluation plate was observed and the number of remaining dots was counted. The removal ratio of dots (100 × {1000 - the number of remaining dots} / 1000) was calculated and the cleaning performance was evaluated on the basis of the following evaluation criteria. The results are shown in Table 2.

### (Cleaning performance criteria)

A (Good): the removal ratio is 90.0% or more
B (Poor): the removal ratio is 70.0% or more and less than 90.0%
C (Particularly poor): the removal ratio is less than 70.0%

### (Second evaluation)

The cleaning solution was placed in a container (glass screw tube bottle), sealed, and allowed to stand in an environment with 25°C, and the pH after the standing was measured by the above-mentioned method. Using the cleaning solution that had been allowed to stand, the evaluation plate was cleaned and the cleaning performance (removal ratio) was evaluated in the same manner as that in the first evaluation. The results are shown in Table 2.

**(Table 2)**

| | | Example | | | | Comparative Example | | |
|---|---|---|---|---|---|---|---|---|
| | | Cleaning solution 1 | Cleaning solution 2 | Cleaning solution 3 | Cleaning solution 4 | Cleaning solution 5 | Cleaning solution 6 | Cleaning solution 7 |
| First evaluation | pH | 9.4 | 9.0 | 9.4 | 8.1 | 8.5 | 9.0 | 9.0 |
| | Evaluation result | A | A | A | A | C | C | A |
| Second evaluation | pH | 9.3 | 9.0 | 9.4 | 8.1 | 8.4 | 9.0 | 7.2 |
| | Evaluation result | A | A | A | A | C | C | C |

### (Evaluation result)

As shown in Table 2, it was found that the cleaning solutions 1 to 4 including water, a water-soluble organic solvent, an amphoteric surfactant having a betaine structure, a silicone surfactant, a nonionic surfactant other than the silicone surfactant, and an inorganic salt having a pH buffering effect had high removability of the dried ink immediately after the preparation of the cleaning solution and after being allowed to stand for one year. This is presumably because the cleaning solutions 1 to 4 had viscosity at 25°C of 2.5 mPa·s or less, a static surface tension of 25 mN/m or less, and a pH of 8.0 or more and 9.5 or less after being sealed and allowed to stand at room temperature for one year, thereby maintaining the state where the pH is high by the buffering effect even after being allowed to stand.

On the other hand, it was found that in the cleaning solution 5 having viscosity at 25°C of 3.1 mPa·s, the viscosity was high and the removability was low immediately after the preparation of the cleaning solution and after being allowed to stand for one year. Further, it was found that in the cleaning solution 6 having a static surface tension of 29 mN/m, the surface tension was high and the removability was low immediately after the preparation of the cleaning solution and after being allowed to stand for one year. Further, it was found that in the cleaning solution 7 including sodium hydroxide that is an inorganic salt having no pH buffering effect, the pH was reduced to less than 8.0 after being allowed to stand and the removability also decreased accordingly.

## Claims

1. A cleaning solution for cleaning an ink ejection surface (F) of a recording head (2) of an inkjet recording apparatus, comprising:
water;
a water-soluble organic solvent;
an amphoteric surfactant having a betaine structure;
a silicone surfactant;
a nonionic surfactant other than the silicone surfactant; and
an inorganic salt having a pH buffering effect,
the cleaning solution having
viscosity at 25°C of 2.5 mPa·s or less,
a static surface tension of 25 mN/m or less, and
a pH of 8.0 or more and 9.5 or less after being sealed and allowed to stand at room temperature for one year.

2. The cleaning solution according to claim 1, wherein
the nonionic surfactant includes an acetylene surfactant.

3. The cleaning solution according to claim 1, wherein
the amphoteric surfactant having a betaine structure has an amidoalkyl betaine structure.

4. The cleaning solution according to claim 1, wherein
the inorganic salt has a pH buffer range of 8.0 or more and 10.0 or less.

5. The cleaning solution according to claim 1, wherein
a ratio of a total amount of a content of the nonionic surfactant and a content of the silicone surfactant to a content of the amphoteric surfactant having a betaine structure is 10 or less.

6. The cleaning solution according to any one of claims 1 to 5, which is used in a step of wiping the ink ejection surface with a wiping blade two times.

7. An ink set for an inkjet recording apparatus, comprising:
the cleaning solution according to any one of claims 1 to 5; and
an ink that includes a resin component,
dry viscosity at 25°C of the ink dried by 50 mass% being 500 mPa·s or more.
